# EUROPÄISCHE PATENTSCHRIFT

(11) **EP 2 730 709 B1**
(45) Veröffentlichungstag und Bekanntmachung des Hinweises auf die Patenterteilung: **27.02.2019**
(21) Anmeldenummer: 12007684.9
(22) Anmeldetag: 13.11.2012
(51) Int. Cl.: E04B 1/98, F16F 7/10

(54) **Schwingungstilgeranordnung**
Vibration absorber assembly
Agencement de réduction de vibrations

(43) Veröffentlichungstag der Anmeldung: 14.05.2014
(73) Patentinhaber: Wölfel Beratende Ingenieure GmbH & Co. KG, 97204 Höchberg (DE)
(72) Erfinder: Katz, Sebastian, 97082 Würzburg (DE); Engelhardt, Jürgen, 97249 Eisingen (DE); Pankoke, Steffen, 97837 Erlenbach (DE)
(74) Vertreter: Keil & Schaafhausen Patent- und Rechtsanwälte PartGmbB

(56) Entgegenhaltungen:
- EP-A2- 0 428 239
- EP-A2- 0 819 638
- EP-A2- 2 378 118
- DE-A1- 2 616 899
- GB-A- 2 346 667
- GB-A- 2 488 563
- US-A1- 2010 057 260

## Beschreibung

Die Erfindung betrifft eine Schwingungstilgeranordnung zur Verminderung von Schwingungen, insbesondere für hohe schlanke Bauwerke, mit einem Pendel, das am Bauwerk aufhängbar ist, und einer am Pendel angeordneten Tilgermasse, wobei das Pendel durch eine Kopplungseinrichtung mit einer ausschließlich horizontal verlagerbaren Zusatzmasse gekoppelt ist.

Eine derartige Schwingungstilgeranordnung ist aus DE 26 16 899 A1 bekannt. Die Zusatzmasse ist hier als Reibdämpfer ausgebildet, der auf einer mit einem Reibbelag beschichteten und als Reibfläche dienenden Bodenplatte aufliegt.

EP 0 428 239 A2 zeigt einen weiteren dynamischen Dämpfer, bei dem eine Pendelmasse über ein mehrstufiges Pendel an einem Bauwerk aufgehängt ist. Die Pendelmasse steht mit einem Schieber in Verbindung, der auf einer Führungsschiene geführt ist. Der Schieber kann durch einen Antrieb bewegt werden und versetzt dadurch die Masse in Schwingungen.

US 2010/0057260 A1 zeigt einen weiteren Schwingungsdämpfer mit einer gegenüber einer Basis über ein gedämpftes Primärsystem abgestützten Masse, die mit einem Rahmen in Verbindung steht, in dem ein gedämpftes Pendel mit einer Tilgermasse schwenkbar aufgehängt ist.

EP 0 819 638 A2 zeigt ein Verfahren und eine Vorrichtung zum Aufwickeln einer Papierbahn zu einer Rolle mit aktiver Schwingungsdämpfung. Hierzu ist eine an einer Wickelrolle anliegende Walze an einem Pendel aufgehängt, das wiederrum mit einer horizontal bewegbaren Masse verbunden ist. Die Masse kann durch Aktoren in horizontaler Richtung verlagert werden.

GB 2 488 563 A zeigt eine Anordnung von mehreren Massen, die an einer gemeinsamen Drehachse angeordnet sind. Hierbei sind zwei Massen bezogen auf die Drehachse über entsprechende Halterarme symmetrisch angeordnet und eine dritte Masse steht über einen senkrecht zu den Haltearmen verlaufenden Arm mit der Drehachse in Verbindung.

Eine weitere Tilgeranordnung ist aus WO 2009/068599 A2 bekannt. Hier ist eine Windturbine mit einem Stahlturm dargestellt, in dem ein Pendel mit einer Tilgermasse aufgehängt ist. Das Pendel wirkt mit einer Dämpferanordnung zusammen, bei der durch die Bewegung des Pendels Platten relativ zueinander verschoben werden. Dadurch entsteht Reibung, die der Schwingungsbewegung Energie entzieht.

Die Erfindung wird im Folgenden anhand eines Turms für eine Windenergieanlage beschrieben. Sie ist aber auch bei anderen hohen und schlanken Bauwerken anwendbar, z. B. bei Schornsteinen, Antennen, Hochhäusern, Türmen oder Offshore-Bauwerken, wie Transformator-Stationen. Unter einem "hohen, schlanken Bauwerk" soll ein Bauwerk verstanden werden, dass ein Verhältnis zwischen Höhe und kleinster Breite von mindestens 5 aufweist.

Hohe und schlanke Bauwerke, insbesondere Windenergieanlagen und hier besonders Offshore-Windenergieanlagen mit hohen Stahltürmen erfordern Maßnahmen zur Erhöhung der Dämpfung der ersten Eigenform quer zur Windrichtung. Schwingungen in Windrichtung sind bei Windenergieanlagen aufgrund hoher aerodynamischer Dämpfung vielfach nicht so kritisch.
Die Türme von Windenergieanlagen haben in der Regel relativ niedrige Eigenfrequenzen. Man hat daher bereits mehrfach vorgeschlagen, ein Pendel für die Tilgeranordnung zu verwenden. Aufgrund der relativ niedrigen Eigenfrequenzen erfordert das Pendel aber eine relativ große Länge. Ein Pendel mit großer Länge hat bauraumtechnische Nachteile, weil ein entsprechend großer Bauraum für die Schwingungsbewegung des Pendels bereitgestellt werden muss.

Der Erfindung liegt die Aufgabe zugrunde, eine Schwingungstilgeranordnung mit möglichst geringem Bauraumbedarf bereitzustellen.

Diese Aufgabe wird durch eine Schwingungstilgeranordnung der eingangsgenannten Art dadurch gelöst, dass die Kopplungseinrichtung zwischen dem Pendel und der Zusatzmasse in vertikaler Richtung verstellbar ist.

Die Zusatzmasse ist damit eine translativ an das Pendel angekoppelte Masse, die bei einer Schwingungsbewegung des Pendels lediglich in einer horizontalen Ebene hin und her bewegt wird. Eine Höhenveränderung der Zusatzmasse in Schwerkraftrichtung, also in vertikaler Richtung, erfolgt bei der Zusatzmasse nicht. Dementsprechend ergeben sich auch keine Rückstellkräfte, wie sie sich bei der am Pendel festgelegten Tilgermasse ergeben. Durch die Zusatzmasse ist also eine tiefe Abstimmung der Tilgereigenfrequenz bei gleichzeitig geringer Pendellänge möglich. Dies beruht auf der Tatsache, dass die translativ an das Pendel angekoppelte Zusatzmasse nur die Trägheit des Pendels vergrößert, jedoch keine zusätzliche Rückstellkraft hervorruft. Durch die Verstellbarkeit der Kopplungseinrichtung lässt sich die mit der Zusatzmasse zusammenwirkende Länge des Pendels verändern. Durch eine derartige Veränderung lässt sich die Eigenfrequenz der Schwingungstilgeranordnung auch während des Betriebs verändern. Somit ist eine Abstimmung dieser Eigenfrequenz auf die Eigenfrequenz des Bauwerks möglich. Eine solche Verstellung kann dann notwendig sein, wenn die Schwingungstilgeranordnung nach Einbau in Betrieb genommen wird, um ihre Eigenfrequenz bestmöglich auf die Eigenfrequenz des Bauwerks abzustimmen. Die Verstellung kann aber auch notwendig werden, wenn sich im Laufe der Zeit die Eigenfrequenz des Bauwerks verändert. Die Schwingungstilgeranordnung erhält eine adaptive bzw. semiaktive Komponente.

Vorzugsweise ist die Kopplungseinrichtung als Führung ausgebildet, mit der das Pendel gegenüber der Zusatzmasse geführt ist. Diese Führung kann beispielsweise als Gleitführung ausgebildet sein. Da die Zusatzmasse nur horizontal verlagerbar ist, das Pendel aber bei seiner Schwingungsbewegung auch eine vertikale Bewegungskomponente beinhaltet, ermöglicht die Führung, dass das Pendel, das vorzugswiese als Pendelstab ausgebildet ist, und die Zusatzmasse reibungsarm zusammenwirken können. Bei einer Schwingungsbewegung des Pendels können also das Pendel und die Zusatzmasse fortlaufend relativ zueinander bewegt werden.

Vorzugsweise weist die translativ bewegte Zusatzmasse eine größere Masse als die pendelartig bewegte Tilgermasse auf. Im Extremfall kann die pendelartig bewegte Tilgermasse sogar lediglich durch die Masse des Pendels an sich gebildet sein. Durch die Masse der Zusatzmasse lässt sich die gewünschte Trägheit einstellen und damit auch die Eigenfrequenz.

Vorzugsweise ist die Zusatzmasse auf einer Führungsbahn geführt. Die Führungsbahn ermöglicht die Bewegung der Zusatzmasse lediglich mit einem Freiheitsgrad, also in Richtung der Führungsbahn. Damit lässt sich die Schwingungsrichtung relativ genau einstellen.

Bevorzugterweise ist die Zusatzmasse über eine Rollenlagerung auf der Führungsbahn abgestützt. Damit lässt sich die Reibung zwischen der Zusatzmasse und der Führungsbahn kleinhalten, so dass die Zusatzmasse hauptsächlich über ihre Trägheit wirken kann.

Vorzugsweise ist die Führungsbahn in einer horizontalen Ebene verdrehbar. Damit lässt sich die Bewegungsrichtung der Schwingungsbewegung des Pendels an die Schwingungsrichtung des Bauwerks, mit dem die Schwingungstilgeranordnung zusammenwirkt, anpassen. Bei einer Windenergieanlage kann man die Führungsbahn beispielsweise mit der Gondel koppeln, an der die Rotorblätter der Windturbine angeordnet sind. Die Gondel wird durch an sich bekannte Maßnahmen so verdreht, dass der Wind eine optimale Angriffsfläche bei den Rotorblättern hat. Wenn man die Führungsbahn an die Gondel koppelt, dann hat man automatisch auch die richtige Richtung für die Schwingungsbewegung.

Bevorzugterweise ist die Führungsbahn in einem äußeren Rahmen ausgebildet und die Zusatzmasse ist in einem inneren Rahmen angeordnet, der gegenüber dem äußeren Rahmen translatorisch bewegbar ist. Dies ist eine konstruktiv relativ einfache Ausbildung. Sie ermöglicht, dass die Zusatzmasse horizontal verlagerbar ist.

Vorzugsweise ist ein Aktor vorgesehen, der auf die Zusatzmasse wirkt. Damit beinhaltet die Schwingungstilgeranordnung eine aktive Komponente, die einen Betrieb als aktiven Tilger ermöglicht. Damit ergeben sich erweiterte Möglichkeiten, eine Dämpfung oder Tilgung der Schwingungen des Bauwerks herbeizuführen.

Hierbei ist bevorzugt, dass der Aktor zwischen dem inneren Rahmen und dem äußeren Rahmen wirkt. Man verwendet also bereits vorhandene Bauteile, um eine Reaktionskraft zu erzeugen.

Auch ist von Vorteil, wenn der Aktor motorisch und generatorisch betreibbar ist. In diesem Fall ist der Aktor beispielsweise als elektrischer Antrieb ausgebildet, der bei einer Versorgung mit elektrischer Energie die Zusatzmasse antreibt. Man kann den elektrischen Antrieb aber auch kurzschließen, beispielsweise über einen ohm'schen Widerstand, so dass er bremsend und damit dämpfend auf die Bewegung der Zusatzmasse einwirkt.

Es ist bevorzugt, dass der Aktor mit einer Regeleinrichtung verbunden ist. Die Regeleinrichtung kann mit einem oder mehreren Sensoren verbunden sein, die eine Information über Schwingungen des Gebäudes bereitstellen. Die Regelvorrichtungen kann den Aktor dann so antreiben, dass die Bewegungen der Zusatzmasse diesen Schwingungen entgegenwirken.

Vorzugsweise ist die Zusatzmasse mit einer Dämpfungseinrichtung verbunden. Die Schwingungstilgeranordnung beinhaltet also zusätzlich eine vorzugsweise passive Dämpfung. Wenn die passive Dämpfung ohne Energiezufuhr von außen auskommt, dann kann die passive Dämpfung bei Ausfall des Aktors als Rückfall- oder Notfunktion verwendet werden. Auch bei Verwendung eines Aktors ergeben sich mit der Dämpfung verbesserte Schwingungstilgungseigenschaften.

Hierbei ist bevorzugt, dass die Dämpfungseinrichtung als Wirbelstromdämpfer ausgebildet ist. Bei einem Dämpfer wird Bewegungsenergie irreversibel in eine andere Energieform umgesetzt. Diese andere Energieform ist in den meisten Fällen Wärme. Ein Wirbelstromdämpfer verwendet zur Umsetzung der Bewegungsenergie elektrische Ströme, die durch ein Magnetfeld induziert werden, das bei einer Bewegung des Pendels gegenüber einem anderen Element bewegt wird. Diese Wirbelströme erzeugen dann Wärme. Die dadurch der Schwingungsbewegung entzogene Energie führt zur Dämpfung der Schwingung. Der Wirbelstromdämpfer hat den Vorteil, dass seine Dämpfungswirkung abhängig von der Bewegungsgeschwindigkeit des Pendels ist. Bis zu einer Grenzgeschwindigkeit kann die Dämpfungskraft als linear, d. h. als proportional zur Geschwindigkeit angenommen werden. Die Frequenz der Schwingung ist dafür von untergeordneter Bedeutung.

Die Erfindung wird im Folgenden anhand eines bevorzugten Ausführungsbeispiels in Verbindung mit der Zeichnung beschrieben. Hierin zeigen:

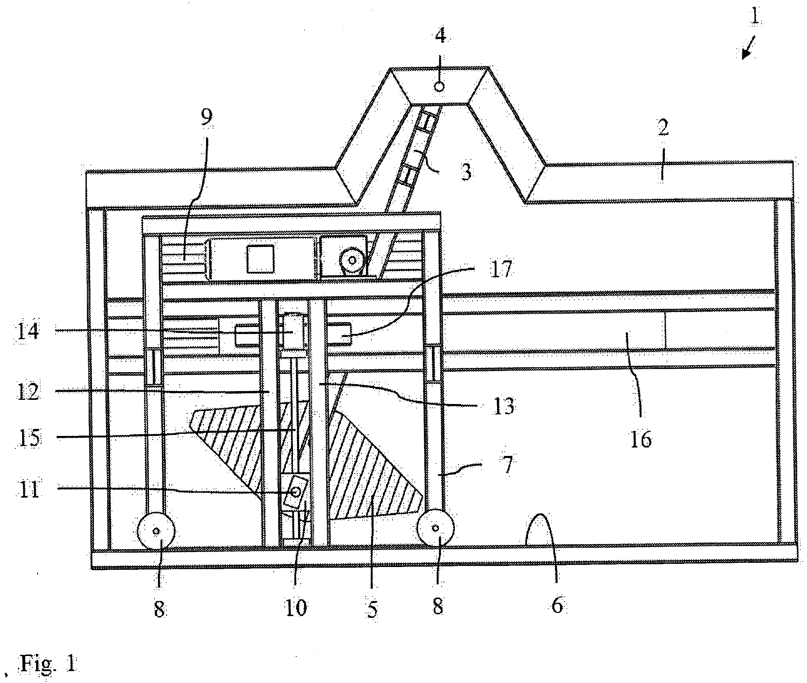

- Fig. 1: eine schematisierte Seitenansicht einer Schwingungstilgeranordnung,

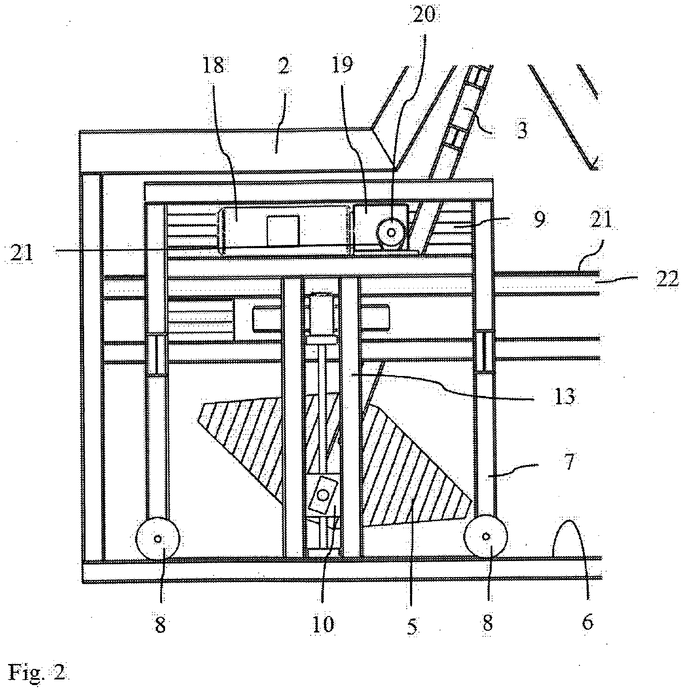

- Fig. 2: eine vergrößerte Darstellung eines Teils der Fig. 1 und
- Fig. 3: eine Vorderansicht der Schwingungstilgeranordnung.

Eine Schwingungstilgeranordnung 1, die in der Zeichnung stark schematisiert dargestellt ist, weist einen äußeren Rahmen 2 auf, der mit nicht näher dargestellten Mitteln in einem hohen, schlanken Bauwerk aufgehängt werden kann. Unter einem "hohen, schlanken Bauwerk" soll ein Bauwerk verstanden werden, das ein Verhältnis zwischen Höhe und kleinster Breite von mindestens 5 aufweist. Wenn es sich bei dem Bauwerk beispielsweise um den Turm einer Windenergieanlage handelt, dann kann der äußere Rahmen 2 an der Gondel der Windenergieanlage befestigt werden, so dass der äußere Rahmen 2 und damit die Schwingungstilgeranordnung 1 insgesamt mit der Gondel verdreht werden können.

Für die Zwecke der vorliegenden Beschreibung ist der Begriff "vertikal" als "in Schwerkraftrichtung" zu verstehen. Der Begriff "horizontal" ist als "senkrecht zur Schwerkraftrichtung" zu verstehen. Eine Verlagerung einer Masse in horizontaler Richtung bewirkt also keine Änderung der Position der Masse in Höhenlage, also in vertikaler Richtung.
Die Schwingungstilgeranordnung 1 weist ein Pendel 3 auf, das in einem Punkt 4 im äußeren Rahmen 2 drehbar gelagert ist. Das Pendel 3 ist als Pendelstab ausgebildet, der bei einer Schwingungsbewegung des Pendels 3 seine gestreckte Lage beibehält.

Am in Schwerkraftrichtung unteren Ende des Pendels 3 ist eine Tilgermasse 5 angeordnet. Wenn das Pendel 3 schwingt, dann schwingt die Tilgermasse 5 mit und ändert dabei ihre Position sowohl in horizontaler Richtung als auch in vertikaler Richtung. An den Umkehrpunkten der Schwingungsbewegung des Pendels 3 ist die Tilgermasse 5 am weitesten in vertikaler Richtung angehoben und erzeugt damit eine Rückstellkraft.

Die Tilgermasse 5 ist am Pendel 3 fixiert, d. h. bei einer Schwingungsbewegung des Pendels 3 ändert sich die Zuordnung zwischen der Tilgermasse 5 und dem Pendel 3 nicht. Allerdings kann die Position Der Tilgermasse 5 am Pendel 3 eingestellt werden.

Die Tilgermasse 5 weist in Seitenansicht die Form einer Raute auf, so dass die Tilgermasse 5 schwingen kann, ohne an den Umkehrpositionen des Pendels 3 mit anderen Bauelementen in Konflikt zu kommen.

Der äußere Rahmen 2 weist eine Führungsbahn 6 auf, auf der ein innerer Rahmen 7 mit Hilfe von Rollen 8 geführt ist. Die Rollen 8 bilden eine Rollenlagerung.

Im oder am inneren Rahmen 7 ist eine Zusatzmasse 9 angeordnet. Diese Zusatzmasse 9 ist im inneren Rahmen 7 unbeweglich, so dass sie gemeinsam mit dem inneren Rahmen 7 bewegbar ist.

Das Pendel 3 ist über eine Kopplungseinrichtung 10 mit dem inneren Rahmen 7 und damit mit der Zusatzmasse 9 gekoppelt. Die Kopplungseinrichtung 10 weist eine Führung 11 auf, die beispielsweise als Gleitführung ausgebildet ist. Durch die Führung 11 ist das Pendel 3 gegenüber dem inneren Rahmen 7 und damit gegenüber der Zusatzmasse 9 geführt.

Wenn das Pendel 3 schwingt, dann bewegt das Pendel 3 den inneren Rahmen 7 und damit die Zusatzmasse 9 mit. Die Zusatzmasse 9 wird allerdings ausschließlich in horizontale Richtung verlagert, weil der innere Rahmen 7 auf der horizontalen Führungsbahn 6 abgestützt ist. Die Zusatzmasse 9 wirkt also nur mir ihrer Trägheit. Sie setzt der Bewegung des Pendels 3 keine Rückstellkraft oder dergleichen entgegen. Die Führung 11 ermöglicht eine Relativbewegung zwischen dem Pendel 3 und der Zusatzmasse 9 in vertikaler Richtung. Damit wird der Tatsache Rechnung getragen, dass das untere Ende des Pendels 3 bei einer Schwingungsbewegung fortlaufend seine Position in vertikaler oder Schwerkraftrichtung ändert.

Die Kopplungseinrichtung 10 ist zwischen zwei Schienen 12, 13 geführt, die am inneren Rahmen 7 ausgebildet sind. Die Position der Kopplungseinrichtung 10 zwischen den beiden Schienen 12, 13 ist in vertikale Richtung verstellbar. Hierzu ist ein Verstellmotor 14 vorgesehen, der beispielsweise über eine Gewindespindel 15 mit der Kopplungseinrichtung 10 verbunden ist. Die Gewindespindel 15 steht über eine Gewindepaarung mit der Kopplungseinrichtung 10 in Eingriff. Wenn die Gewindespindel 15 durch den Verstellmotor 14 gedreht wird, kann die Kopplungseinrichtung in vertikaler Richtung verstellt werden. Damit wird die mit der Zusatzmasse 9 zusammenwirkende wirksame Länge des Pendels 3 verändert, so dass man in gewissem Umfang eine Verstellung der Eigenfrequenz der Schwingungstilgeranordnung bewirken kann.

Die Zusatzmasse 9 ist größer als die Tilgermasse 5. Die Tilgermasse 5 kann, falls erforderlich, auch durch die Masse des Pendels 3 alleine realisiert werden. In der Regel wird man aber auch die Tilgermasse mit einer gewissen Größe ausbilden.

Im äußeren Rahmen 2 ist eine Platte 16 aus einem elektrisch leitenden Material angeordnet. Diese Platte 16 kann beispielsweise aus Kupfer oder Aluminium oder einer entsprechenden Legierung gebildet sein.

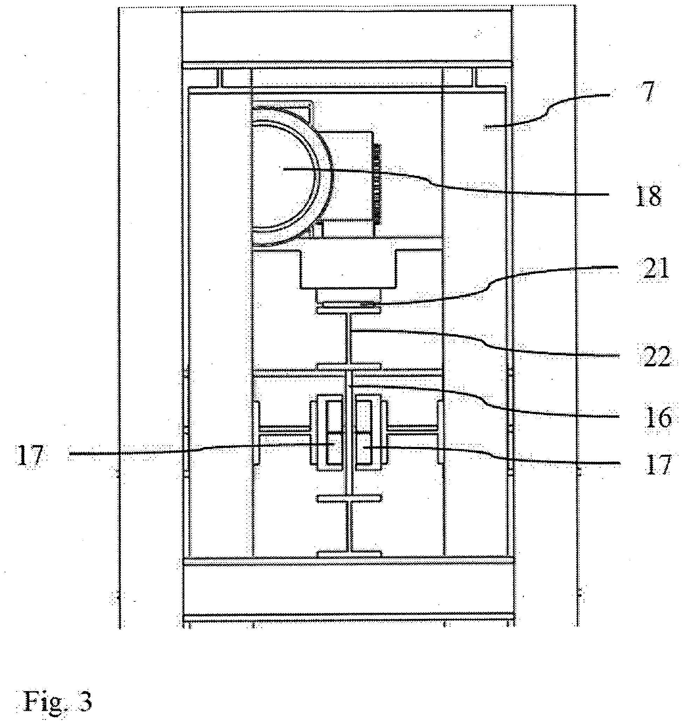

Am inneren Rahmen 7 sind Permanentmagnete 17 angeordnet, und zwar, wie dies in Fig. 3 erkennbar ist, beidseits der Platte 16. Wenn nun die Zusatzmasse 9 gemeinsam mit dem inneren Rahmen 7 gegenüber dem äußeren Rahmen 2 bewegt wird, dann induzieren die Permanentmagnete 17 in der Platte 16 elektrische Wirbelströme. Diese Wirbelströme wiederum erzeugen Wärme. Die Wärme wird nach außen abgegeben. Durch die Umwandlung von Bewegungsenergie in Wärmeenergie wird der Schwingungsbewegung des Pendels 3 Energie entzogen, so dass die Permanentmagnete 17 gemeinsam mit der Platte 16 eine passive Dämpfungseinrichtung bilden, genauer gesagt einen Wirbelstromdämpfer.

Der innere Rahmen 7 trägt weiterhin einen Aktor 18, mit dem der innere Rahmen 7 und damit die Zusatzmasse 9 gegenüber dem äußeren Rahmen 2 verlagerbar ist. Im vorliegenden Ausführungsbeispiel ist der Aktor 18 als Rotationsmotor ausgebildet, der über ein Getriebe 19 ein Zahnrad 20 antreibt, das mit einem Zahnriemen 21 zusammenwirkt. Der Zahnriemen 21 ist auf einem Träger 22 abgestützt, der am äußeren Rahmen 2 befestigt ist. Der Zahnriemen 21 wird durch nicht näher dargestellte Umlenkrollen, die am inneren Rahmen 7 angeordnet sind, auf dem Träger 22 gehalten. Wenn sich das Zahnrad 20 dreht, dann wirkt es mit dem Zahnriemen 21 derart zusammen, dass der innere Rahmen 7 gegenüber dem äußeren Rahmen 2 in horizontale Richtung verlagert werden kann. Der Aktor 18 ist in nicht näher dargestellter, aber an sich bekannter Weise mit Sensoren, beispielsweise Schwingungssensoren, verbunden, in der Regel über einen Regler, so dass der Aktor 18 eine aktive Tilgungskomponente beisteuern kann. Die Schwingungstilgeranordnung ist in diesem Fall auch als aktive Schwingungstilgeranordnung ausgebildet.

Natürlich kann der Aktor 18 auch auf andere Weise ausgebildet sein, beispielsweise als linearer Antrieb, beispielsweise als linearer Asynchronmotor. Hier wird dann ein Teil des Antriebs am inneren Rahmen 7 und ein Teil des Antriebs am äußeren Rahmen 2 befestigt.

Der Aktor 18 kann sowohl motorisch wirken, also die Zusatzmasse 9 antreiben, als auch generatorisch wirken, so dass er von der Zusatzmasse 9 angetrieben wird. Im letzten Fall kann man beispielsweise die elektrischen Wirkungen des Aktors kurzschließen, z. B. über einen elektrischen Widerstand. Dieser Widerstand wandelt Strom in Wärme um und entzieht auf diese Weise der Bewegung der Zusatzmasse 9 Energie. Der Aktor 18 kann dann als Dämpfer wirken.

Der Verstellmotor 14 ist eine semiaktive Komponente, die eine Verstellung der Tilgereigenfrequenz ermöglicht. Diese Verstellung wird durch Verschiebung des Angriffspunkts oder -bereichs der translativen Zusatzmasse 5 am Pendel 3 erreicht.

Die Schwingungstilgeranordnung 1 beinhaltet eine aktive Komponente, nämlich den Aktor 18, die einen Betrieb als aktiven Tilger ermöglicht. Darüber hinaus beinhaltet die Schwingungstilgeranordnung 1 eine passive Dämpfung in Form des oben beschriebenen Wirbelstromdämpfers. Dies verringert die notwendige Kraft der aktiven Komponente. Durch die passive Dämpfung wirkt der aktive Tilger bei Wegfall der Stromversorgung des Aktors als passiver Tilger, d. h. es ergibt sich ein Fail-Safe-Verhalten oder eine Notfunktion.

Die Montage der Schwingungstilgeranordnung 1 kann bei einer Windenergieanlage in der Gondel oder unterhalb der Gondel erfolgen und zwar hier sowohl außerhalb des Turms als auch innerhalb des Turms. Bei Montage am Turm wird eine Nachführeinrichtung vorgesehen, damit die Wirkrichtung des Tilgers immer quer zur Windrichtung orientiert ist. Mit anderen Worten wird die Führungsbahn 6 immer quer zur Windrichtung ausgerichtet. Alternativ kann bei Montage im Turm der Windenergieanlage auch eine mechanische Kopplung der Schwingungstilgeranordnung an die Gondel erfolgen.

## Patentansprüche

1. Schwingungstilgeranordnung (1) zur Verminderung von Schwingungen, insbesondere für hohe schlanke Bauwerke, mit einem Pendel (3), das am Bauwerk aufhängbar ist, und einer am Pendel (3) angeordneten Tilgermasse (5), wobei das Pendel (3) durch eine Kopplungseinrichtung (10) mit einer ausschließlich horizontal verlagerbaren Zusatzmasse (9) gekoppelt ist, **dadurch gekennzeichnet, dass** die Kopplungseinrichtung (10) zwischen dem Pendel (3) und der Zusatzmasse (9) in vertikaler Richtung verstellbar ist.

2. Schwingungstilgeranordnung nach Anspruch 1, **dadurch gekennzeichnet, dass** die Kopplungseinrichtung (10) als Führung (11) ausgebildet ist, mit der das Pendel (3) gegenüber der Zusatzmasse (9) geführt ist.

3. Schwingungstilgeranordnung nach Anspruch 1 oder 2, **dadurch gekennzeichnet, dass** die Zusatzmasse (9) eine größere Masse als die Tilgermasse (5) aufweist.

4. Schwingungstilgeranordnung nach einem der Ansprüche 1 bis 3, **dadurch gekennzeichnet, dass** die Zusatzmasse (9) auf einer Führungsbahn (6) geführt ist.

5. Schwingungstilgeranordnung nach Anspruch 4, **dadurch gekennzeichnet, dass** die Zusatzmasse (9) über eine Rollenlagerung (8) auf der Führungsbahn (6) abgestützt ist.

6. Schwingungstilgeranordnung nach Anspruch 4 oder 5, **dadurch gekennzeichnet, dass** die Führungsbahn (6) in einer horizontalen Ebene verdrehbar ist.

7. Schwingungstilgeranordnung nach einem der Ansprüche 4 bis 6, **dadurch gekennzeichnet, dass** die Führungsbahn (6) in einem äußeren Rahmen (2) ausgebildet ist und die Zusatzmasse (9) in einem inneren Rahmen (7) angeordnet ist, der gegenüber dem äußeren Rahmen (2) translatorisch bewegbar ist.

8. Schwingungstilgeranordnung nach einem der Ansprüche 1 bis 7, **dadurch gekennzeichnet, dass** ein Aktor (18) vorgesehen ist, der auf die Zusatzmasse (9) wirkt.

9. Schwingungstilgeranordnüng nach Anspruch 8, **dadurch gekennzeichnet, dass** der Aktor (18) zwischen dem inneren Rahmen (7) und dem äußeren Rahmen (2) wirkt.

10. Schwingungstilgeranordnung, nach Anspruch 8 oder 9, **dadurch gekennzeichnet, dass** der Aktor (18) motorisch und generatorisch betreibbar ist.

11. Schwingungstilgeranordnung, nach einem der Ansprüche 8 bis 10, **dadurch gekennzeichnet, dass** der Aktor (18) mit einer Regeleinrichtung verbunden ist.

12. Schwingungstilgeranordnung nach einem der Ansprüche 1 bis 11, **dadurch gekennzeichnet, dass** die Zusatzmasse (9) mit einer Dämpfungseinrichtung (16, 17) verbunden ist.

13. Schwingungstilgeranordnung nach Anspruch 12, **dadurch gekennzeichnet, dass** die Dämpfungseinrichtung (16, 17) als Wirbelstromdämpfer ausgebildet ist.

## Claims

1. A vibration absorber arrangement (1) for reducing vibrations, particularly for tall narrow buildings, having a pendulum (3), which is suspensible on the building, and an absorber mass (5) arranged on the pendulum (3), wherein the pendulum (3) is coupled by means of a coupling device (10) to an additional mass (9), which is displaceable horizontally exclusively, **characterized in that** the coupling device (10) is displaceable in the vertical direction between the pendulum (3) and the additional mass (9).

2. The vibration absorber arrangement according to Claim 1, **characterized in that** the coupling device (10) is constructed as a guide (11), using which the pendulum (3) is guided with respect to the additional mass (9).

3. The vibration absorber arrangement according to Claim 1 or 2, **characterized in that** the additional mass (9) has a larger mass than the absorber mass (5).

4. The vibration absorber arrangement according to one of Claims 1 to 3, **characterized in that** the additional mass (9) is guided on a guide path (6).

5. The vibration absorber arrangement according to Claim 4, **characterized in that** the additional mass (9) is supported on the guide path (6) by means of a roller bearing (8).

6. The vibration absorber arrangement according to Claim 4 or 5, **characterized in that** the guide path (6) is rotatable in a horizontal plane.

7. The vibration absorber arrangement according to one of Claims 4 to 6, **characterized in that** the guide path (6) is constructed in an outer frame (2) and the additional mass (9) is arranged in an inner frame (7) which is movable in a translational manner with respect to the outer frame (2).

8. The vibration absorber arrangement according to one of Claims 1 to 7, **characterized in that** an actuator (18) is provided, which acts on the additional mass (9).

9. The vibration absorber arrangement according to Claim 8, **characterized in that** the actuator (18) acts between the inner frame (7) and the outer frame (2).

10. The vibration absorber arrangement according to Claim 8 or 9, **characterized in that** the actuator (18) can be operated in a motorized and regenerative manner.

11. The vibration absorber arrangement according to one of Claims 8 to 10, **characterized in that** the actuator (18) is connected to a control device.

12. The vibration absorber arrangement according to one of Claims 1 to 11, **characterized in that** the additional mass (9) is connected to a damping device (16, 17).

13. The vibration absorber arrangement according to Claim 12, **characterized in that** the damping device (16, 17) is constructed as an eddy current damper.

## Revendications

1. Agencement amortisseur de vibrations (1), destiné à réduire des vibrations, notamment pour des bâtiments hauts et élancés, pourvu d'un pendule (3) qui est susceptible de s'accrocher sur le bâtiment et d'une masse amortisseuse (5) qui est placée sur le pendule (3), le pendule (3) étant couplé par un système de couplage (10) avec une masse additionnelle (9) déplaçable uniquement à l'horizontale, **caractérisé en ce que** le système de couplage (10) est réglable en direction verticale entre le pendule (3) et la masse additionnelle (9).

2. Agencement amortisseur de vibrations selon la revendication 1, **caractérisé en ce que** le système de couplage (10) est conçu sous la forme d'un guidage (11) par lequel le pendule (3) est guidé par rapport à la masse additionnelle (9).

3. Agencement amortisseur de vibrations selon la revendication 1 ou 2, **caractérisé en ce que** la masse additionnelle (9) présente une masse supérieure à la masse amortisseuse (5).

4. Agencement amortisseur de vibrations selon l'une quelconque des revendications 1 à 3, **caractérisé en ce que** la masse additionnelle (9) est guidée sur une trajectoire de guidage (6).

5. Agencement amortisseur de vibrations selon la revendication 4, **caractérisé en ce que** la masse additionnelle (9) est appuyée par l'intermédiaire d'un support à rouleaux (8) sur la trajectoire de guidage (6) .

6. Agencement amortisseur de vibrations selon la revendication 4 ou 5, **caractérisé en ce que** la trajectoire de guidage (6) est rotative dans un plan horizontal.

7. Agencement amortisseur de vibrations selon l'une quelconque des revendications 4 à 6, **caractérisé en ce que** la trajectoire de guidage (6) est conçue dans un cadre extérieur (2) et la masse additionnelle (9) est placée dans un cadre intérieur (7) qui est déplaçable en translation par rapport au cadre extérieur (2).

8. Agencement amortisseur de vibrations selon l'une quelconque des revendications 1 à 7, **caractérisé en ce qu'**il est prévu un actionneur (18) qui agit sur la masse additionnelle (9).

9. Agencement amortisseur de vibrations selon la revendication 8, **caractérisé en ce que** l'actionneur (18) agit entre le cadre intérieur (7) et le cadre extérieur (2).

10. Agencement amortisseur de vibrations, selon la revendication 8 ou 9, **caractérisé en ce que** l'actionneur (18) est susceptible de fonctionner par moteur et par générateur.

11. Agencement amortisseur de vibrations, selon l'une quelconque des revendications 8 à 10, **caractérisé en ce que** l'actionneur (18) est relié avec un système de réglage.

12. Agencement amortisseur de vibrations selon l'une quelconque des revendications 1 à 11, **caractérisé en ce que** la masse additionnelle (9) est reliée avec un système amortisseur (16, 17).

13. Agencement amortisseur de vibrations selon la revendication 12, **caractérisé en ce que** le système amortisseur (16, 17) est conçu sous la forme d'un amortisseur à courants de Foucault.
